# EUROPÄISCHE PATENTSCHRIFT

(11) **EP 3 357 610 B1**
(45) Veröffentlichungstag und Bekanntmachung des Hinweises auf die Patenterteilung: **09.10.2019**
(21) Anmeldenummer: 18157082.1
(22) Anmeldetag: 03.08.2011
(51) Int. Cl.: B23B 27/04, B23B 29/04

(54) **SCHNEIDKÖRPER FÜR SCHNEIDWERKZEUG ZUM EINSTECHEN UND STECHDREHEN**
CUTTING INSERT FOR CUTTING TOOL FOR PIERCING AND TURNING
ÉLÉMENT DE COUPE POUR OUTIL DE COUPE PERMETTANT LE SAIGNAGE ET LE MORTAISAGE

(30) Priorität: 04.08.2010 DE 102010038878
(43) Veröffentlichungstag der Anmeldung: 08.08.2018
(62) Teilanmeldung aus: 11741201.5
(73) Patentinhaber: CeramTec GmbH, 73207 Plochingen (DE)
(72) Erfinder: NEBOJSA, Sevdic, 73207 Plochingen (DE); STEMMER, Uwe, 72622 Nürtingen (DE); KRESSEL, Heinz, 87640 Biessenhofen (DE)

(56) Entgegenhaltungen:
- WO-A1-00/51768
- DE-A1- 2 259 216
- DE-A1-102008 001 135
- DE-C1- 3 909 358
- DE-U1- 8 214 831
- US-A1- 2009 142 149

## Beschreibung

Die Erfindung betrifft einen Schneidkörper gemäß dem Oberbegriff des Patentanspruchs 1, insbesondere für Schneidwerkzeug zum radialen und axialen Einstechen und zum seitlichen Verfahren, zum sogenannten Stechdrehen von hauptsächlich metallischen Werkstoffen, mit einem Klemmhalter und einer am Klemmhalter befestigten Schneidkörperunterlage auf der der Schneidkörper aufliegt, der von einem Spannfinger einer Spannpratze auf die Schneidkörperunterlage gedrückt wird, wobei der Schneidkörper auf der Schneidkörperunterlage über ein Prisma geführt ist.

Ein solches Schneidwerkzeug und einen solchen Schneidkörper zeigt DE 10 2008 001135 A1.

Der Erfindung liegt die Aufgabe zugrunde, ein Schneidwerkzeug mit seinen Bauteilen so zu verbessern, dass auch seitliche Drehbearbeitungen durchzuführen sind, ohne dass sich der Schneidkörper aus seinem Sitz herausdrehen kann. Außerdem soll ein seitliches Wegdrehen der Spannpratze verhindert werden.

Erfindungsgemäß wird diese Aufgabe durch einen Schneidkörper gemäß dem Patentanspruch 1 gelöst. Der Schneidkörper weist auf seiner zum Spannfinger gewandten ebenen Oberfläche zwei entgegengesetzt geneigte ebene rechteckige Dachschrägen in der Art eines Sattel- oder Giebeldachs eines Hauses auf, die sich ausgehend von der Oberfläche in den Schneidkörper hinein erstrecken. Der Spannfinger weist an seiner zum Schneidkörper gewandten Unterseite zwei an die Schrägen angepasste Rampen auf.

Da der Schneidkörper einerseits auf der Schneidkörperunterlage über ein Prisma geführt ist und andererseits auf seiner Oberfläche Dachschrägen aufweist, in die entsprechende Rampen am Spannfinger eingreifen, ist der Schneidkörper auf seiner Ober- und Unterseite geführt und kann auch seitliche Drehbearbeitungen ausführen, ohne dass er sich aus seinem Sitz herausdreht.

Bevorzugt ist zwischen den zwei Dachschrägen eine Firstfläche angeordnet, die einen Teil der Oberfläche des Schneidkörpers bildet. Diese Firstfläche wird benötigt, damit keine scharfe Kante entsteht und diese sich in das Spannelement bzw. den Spannfinger der Spannpratze eindrücken kann. Im Spannelement bzw. im Spannfinger befindet sich ein Radius zwischen den zwei Dachschrägen.

In einer Ausgestaltung bildet die Firstfläche ein Rechteck mit einer kürzeren und einer längeren Seite. Bevorzugt ist die kürzere Seite des Rechtecks gleich der Breite b der Firstfläche 9 und damit gleich dem Abstand der Dachschrägen 7 voneinander und ist die längere Seite des Rechtecks gleich der Breite B der Dachschrägen. Hierdurch ist die zur Verfügung stehende Fläche optimal ausgenutzt.

In bevorzugter Ausführungsform verlaufen die Dachschrägen in einem Winkel 15°> α > 5°bevorzugt α = 10° zur Oberfläche des Schneidkörpers, wobei sich die Dachschrägen ausgehend von der Firstfläche bis zum Rand des Schneidkörpers erstrecken. Nur bei diesen Winkeln ist der Schneidkörper einerseits nur wenig geschwächt und lässt sich andererseits einfach im Schneidwerkzeug verankern. Bei größeren Winkeln, d.h. größer als 15° würde der Schneidkörper zu sehr geschwächt. Bei Winkeln kleiner als 5° ist die Verankerung im Schneidwerkzeug nicht ausreichend.

Vorteilhafterweise sind die Schneidkörperunterlage und die Spannpratze auf dem Klemmhalter mit einer Nut/Feder-Verbindung passgenau geführt. Hierdurch ist eine bessere Verankerung erreicht.

In einer bevorzugten Ausführungsform ist auf dem Klemmhalter eine nach hinten, d. h. weg vom Schneidkörper geneigte, als Nut ausgebildete schiefe Ebene angeordnet und liegt die Spannpratze mit einer als Feder ausgebildeten ähnlich schiefen Ebene auf dieser in der Art einer Nut/Feder-Verbindung passgenau auf. Durch diese passgenaue Führung ist ein seitliches Wegdrehen des Spannelements vermieden, bzw. nicht mehr möglich.

Zur Erhöhung der Spannkraft der Spannpratze auf den Schneidkörper sind auf der schiefen Ebene der Spannpratze an dem den Rampen abgewandten Ende als Rippen ausgebildete Auflagepunkte angeordnet und ist die Durchführung für die Spannschraube am entgegen gesetzten, zu den Rampen gewandten Ende der schiefen Ebene angeordnet. Beim Einschrauben der Spannschraube wirkt hierdurch ein langer Hebelarm, wodurch die Spannkraft erhöht ist.

Ein erfindungsgemäßer Schneidkörper besteht aus einer Keramik und/oder CBN mit einer ebenen Ober- und Unterseite und mit die Ober- und Unterseite verbindenden Seitenflächen. Bevorzugt lässt er sich am eben beschriebenen Schneidwerkzeug einsetzen.

Erfindungsgemäß weist der Schneidkörper auf seiner Oberseite zwei entgegengesetzt geneigte, ebene rechteckige Dachschrägen in der Art eines Sattel- oder Giebeldachs eines Hauses auf, die sich ausgehend von der Oberfläche in den Schneidkörper hinein erstrecken. Diese Dachschrägen ermöglichen einen verdrehsicheren Einbau in ein Schneidwerkzeug.

Bevorzugt ist zwischen den zwei Dachschrägen eine Firstfläche angeordnet, die einen Teil der Oberfläche des Schneidkörpers bildet. Diese Firstfläche wird benötigt, damit sich keine scharfen Kanten bilden.

In bevorzugter Ausführungsform verlaufen die Dachschrägen in einem Winkel 15°> α > 5°bevorzugt α = 10° zur Oberfläche des Schneidkörpers, wobei sich die Dachschrägen ausgehend von der Firstfläche bis zum Rand des Schneidkörpers erstrecken. Nur bei diesen Winkeln ist der Schneidkörper einerseits nur wenig geschwächt und lässt sich andererseits einfach im Schneidwerkzeug verankern. Bei größeren Winkeln, d.h. größer als 15° würde der Schneidkörper zu sehr geschwächt. Bei Winkeln kleiner als 5° ist die Verankerung im Schneidwerkzeug nicht ausreichend.

In bevorzugter Ausführungsform weist der Schneidkörper an seiner Unterseite abstehende Eingriffselemente auf. Hierdurch kann der Schneidkörper auf seiner Unterseite und durch die Dachschrägen auf seiner Oberseite verdrehsicher geführt werden. In einer bevorzugten Ausgestaltung sind die Eingriffselemente sphärische Auskragungen. Vorteilhafterweise sind daher die Eingriffselemente Teil einer Prismenführung.

In einer Ausgestaltung weisen die Auflageflächen der Ober- und Unterseite und/oder die Fasen des Schneidkörpers zumindest Teilflächen auf, die aus der beim Sintern entstandenen Sinterhaut bestehen und keine Schädigung durch eine materialabtragende Behandlung erfahren haben. Dadurch ist eine Nachbearbeitung nach dem Sintern zumindest teilweise vermieden.

In bevorzugter Ausführungsform bestehen die gesamte Ober- und Unterseite aus der beim Sintern entstandenen Sinterhaut. Da die Sinterhaut häufig eine höhere Härte als der Grundwerkstoff besitzt, wird die Verschleißfestigkeit des Schneidstoffes dadurch erhöht.

Umso mehr Fläche des Schneidkörpers aus der beim Sintern entstandenen Sinterhaut bestehen, umso höher ist die Härte. Bevorzugt bestehen daher alle Fasen und/oder Seiten aus der beim Sintern entstandenen Sinterhaut.

In einer Ausgestaltung bestehen daher einzelne Seitenflächen oder bevorzugt alle Seitenflächen aus der beim Sintern entstandenen Sinterhaut.

Die Ober- und/oder Unterseite und/oder die Seitenflächen und/oder die Fasen des Schneidkörpers können zur Verbesserung der Härte mit einer ein- oder mehrlagigen Beschichtung versehen sein.

Eine Spannpratze mit einem Spannfinger, insbesondere für das eben beschriebene Schneidwerkzeug ist dadurch gekennzeichnet, dass am Spannfinger zwei entgegengesetzt geneigte ebene rechteckige Rampen als Negativ eines Sattel- oder Giebeldachs eines Hauses angeordnet sind.

Wie schon erwähnt sind bevorzugt die Schneidkörperunterlage und die Spannpratze auf dem Klemmhalter mit einer Nut/Feder-Verbindung passgenau geführt. Hierdurch befinden sich diese immer in der erforderlichen Position.

In einer Ausgestaltung weist der Klemmhalter eine Nut auf und weist die Schneidkörperunterlage an ihrer zum Klemmhalter gewandten Seite eine Feder auf, wobei die Schneidkörperunterlage über die in die Nut eingreifende Feder passgenau auf dem Klemmhalter geführt ist.

Bevorzugt ist in der Nut und/oder auf der Anlagefläche der Schneidkörperunterlage auf dem Klemmhalter Gewindebohrungen eingebracht und weist die Schneidkörperunterlage an die Anzahl der Gewindebohrungen angepasste durchgehende Bohrungen auf und sind zur Befestigung der Schneidkörperunterlage auf dem Klemmhalter Schrauben, die Schneidkörperunterlage durchragend, in die Gewindebohrungen eingedreht. Hierdurch ist eine einfache und feste Verbindung hergestellt.

Bevorzugt ist die Schneidkörperunterlage im rechten Winkel zur Spannpratze angeordnet.

In der als Nut ausgebildeten schiefen Ebene auf dem Klemmhalter ist eine in einem Winkel y zur schiefen Ebene verlaufende Befestigungsbohrung eingebracht, in die eine die Spannpratze durchragende Spannschraube zur Befestigung der Spannpratze auf dem Klemmhalter eingreift.

Weitere Merkmale der Erfindung sind in den 12 Figuren gezeigt, die nachfolgend beschrieben werden.

Es zeigt:
- Figur 1:: ein Schneidwerkzeug 1 mit Klemmhalter 2, Schneidkörperunterlage 3, Spannpratze 5 und Schneidkörper 6,
- Figur 2:: die Elemente gemäß Figur 1 vergrößert,
- Figur 3:: den Klemmhalter 2 mit befestigter Schneidkörperunterlage 3 mit aufgelegtem Schneidkörper 6,
- Figur 4:: den Klemmhalter 2 alleine,
- Figur 5:: den Klemmhalter 2 mit befestigter Schneidkörperunterlage 3 alleine,
- Figur 6:: eine Spannpratze 5 mit eingesetzter Spannschraube 17 als Ansicht,
- Figur 7:: die Spannpratze 5 ohne eingesetzte Spannschraube,
- Figur 8:: die Spannpratze 5 von unten,
- Figur 9:: den Klemmhalter 2 gemäß Figur 4 von der Seite,
- Figur 10:: den Klemmhalter 2 von oben,
- Figur 11:: die Schneidkörperunterlage 3 von der Seite (Figur 11a) und im Schnitt (Figur 11b) und
- Figur 12:: den erfindungsgemäßen Schneidkörper 6 von oben (Figur 12a) und als Ansicht (Figur 12b).

Der hier beschriebene Klemmhalter 2 wird auch als Grundhalter, die Schneidkörperunterlage 3 als Stechschwert und die Spannpratze 5 als Stechplatte bezeichnet.

Die Erfindung betrifft einen Schneidkörper 6 für ein Schneidwerkzeug 1 (siehe Figuren), welches in seiner Grundkonzeption gleichermaßen zum Einstechen, Gewindeschneiden und Stechdrehen verwendet werden kann. Es besteht immer aus einem Grundträger, im Folgenden Klemmhalter 2 genannt, einer auswechselbaren Schneidkörperunterlage 3 und einem auswechselbaren Schneidkörperniederhalter, im Folgenden Spannpratze 5 genannt. Die Schneidkörperunterlage 3 und die Spannpratze 5 bilden das so genannte Spannsystem und sind an die Form und Funktion des verwendeten Schneidkörpers 6 angepasst.

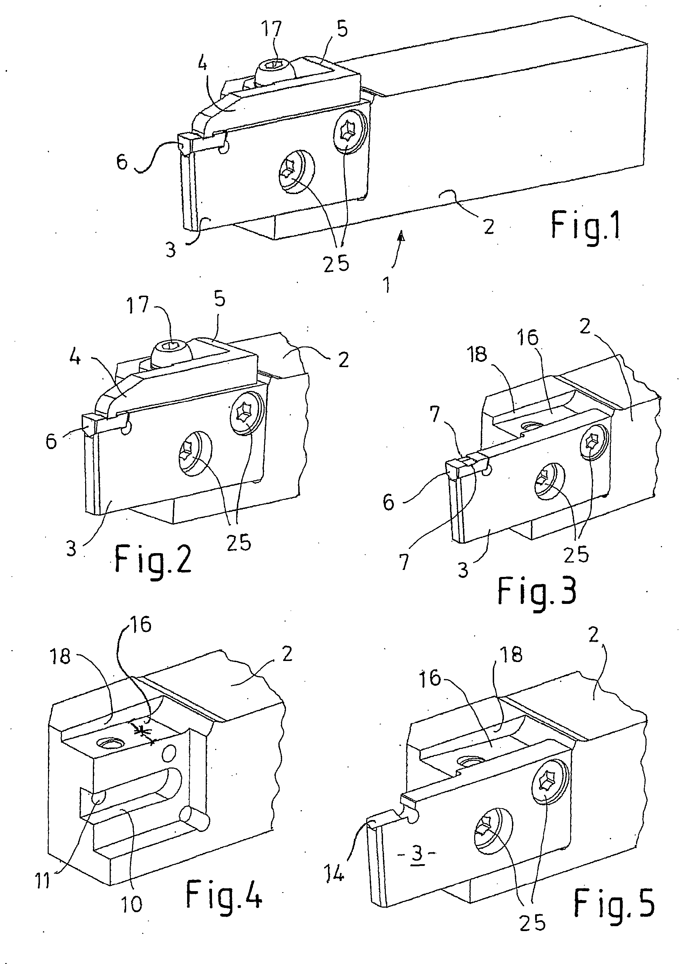

Der Klemmhalter 2 (siehe Figuren 1 bis 5) weist in axialer Richtung eine Führungsnut 10 (siehe Figur 4) auf, in deren Boden eine Gewindebohrung 11 eingebracht ist. In diese Führungsnut 10 ragt eine Feder 24 an der zum Klemmhalter 2 zeigenden Seite der Schneidkörperunterlage 3. Die Feder 24 ist passgenau in die Führungsnut 10 eingesetzt, so dass die Schneidkörperunterlage 3 auf dem Klemmhalter 2 passgenau geführt ist.

Zur formschlüssigen Verbindung des Schneidkörpers 6 auf der Schneidkörperunterlage 3 wird der Schneidkörper 6 durch eine prismenförmige Verbindung, auch als Führungsleiste 14 bezeichnet, zwischen der Unterseite des Schneidkörpers 6 und der Oberseite der Schneidkörperunterlage 3 geführt. Mögliche Form- und Lagefehler der miteinander wirkenden Komponenten werden durch die gleiche axiale Ausrichtung der Komponenten und die aufeinander abgestimmten Toleranzen der Anlagen, Führungen und Prismen im technischen Sinne einer Spielpassung kompensiert.

Weiterhin ist der Schneidkörper 6 auch auf seiner Oberseite 15a geführt. Hierzu weist der Schneidkörper 6 zwei entgegengesetzt geneigte, ebene rechteckige Dachschrägen 7 in der Art eines Sattel- oder Giebeldachs eines Hauses auf, die sich ausgehend von der Oberfläche 12 in den Schneidkörper 6 hinein erstrecken. Diese Dachschrägen 7 ermöglichen einen verdrehsicheren Einbau in ein Schneidwerkzeug 1.

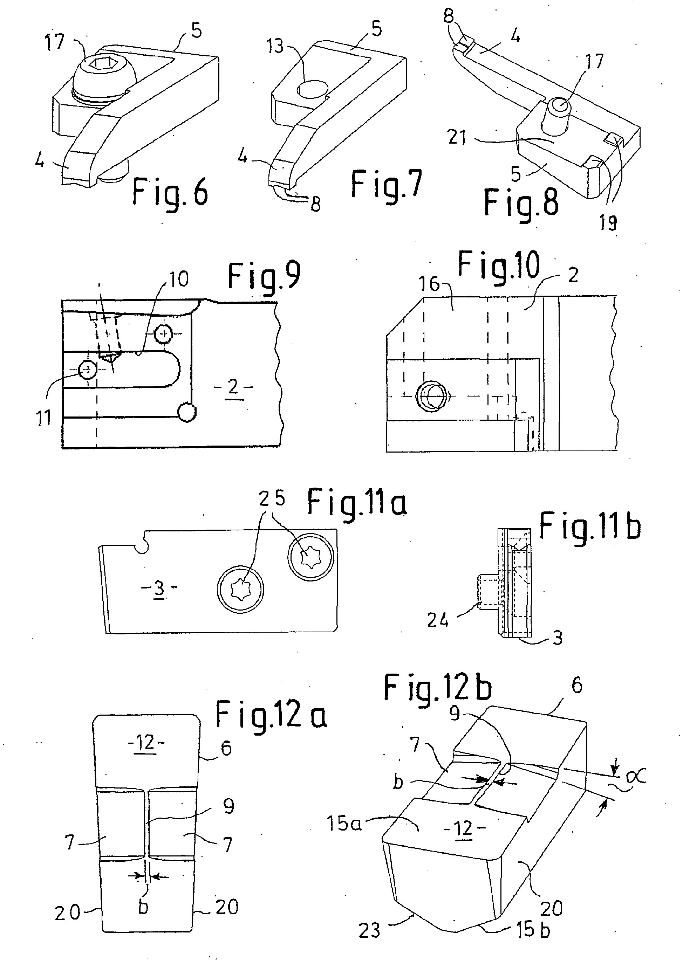

Zwischen den zwei Dachschrägen 7 ist eine Firstfläche 9 angeordnet, die einen Teil der Oberfläche 12 des Schneidkörpers bildet. Die vier Seiten der Firstfläche 9 bilden ein Rechteck. Bevorzugt ist die kürzere Seite gleich dem Abstand b der Firstflächen 9 voneinander und die längere Seite des Rechtecks gleich der Breite B der Dachschrägen (siehe Figur 11a).

Die Dachschrägen 7 verlaufen in der hier gezeigten Ausführungsform in einem Winkel α = 10° (siehe Figur 12b) zur Oberfläche 12 des Schneidkörpers 6, wobei sich die Dachschrägen 7 ausgehend von der Firstfläche 9 bis zum Rand des Schneidkörpers 6 erstrecken.

Zur passgenauen Verankerung des Schneidkörpers 6 auf der Schneidkörperunterlage 3 weist der Schneidkörper 6 an seiner Unterseite abstehende Eingriffselemente 23 auf. Hierdurch ist der Schneidkörper 6 auf seiner Unterseite 15b und durch die Dachschrägen 7 auf seiner Oberseite 15a verdrehsicher geführt. Die Eingriffselemente 23 sind bevorzugt sphärische Auskragungen. Die Eingriffselemente 23 sind Teil einer Prismenführung.

Ein weiteres Merkmal ist die besondere Ausführung und Lagerung der Spannpratze 5, die auf der Oberseite des Klemmhalters 2 durch eine Spannschraube 17 befestigt ist. Die Spannpratze 5 liegt mit ihrer schiefen Ebene 21 auf einer schiefen Ebene 16 auf dem Klemmhalter 2 auf und ist von der Führungsfläche 18 passgenau geführt (siehe Figuren 3 bis 8). Die Spannkraft der Spannschraube 17 drückt die Spannpratze 5 auf den Klemmhalter 2 auf die schiefe Ebene 16 bis diese mit den Auflagepunkten 19 auf der schiefen Ebene 16 angekommen sind. Ein weiteres Anziehen der Spannschraube 17 wirkt wie eine Hebelwirkung und spannt den Spannfinger 4 der Spannpratze 5 in Richtung Schneidkörper 6, wodurch eine zusätzliche Spannkraft auf den Schneidkörper 6 ausgeübt wird. Durch diese Spannkraft wird der Schneidköper 6 in das Prisma, bzw. die Führungsleiste 14 auf die Schneidkörperunterlage 3 gedrückt.

Zur Verstärkung dieser Hebelwirkung sind die Auflagepunkte 19 und die Durchführung 13 für die Spannschraube 17 möglichst weit voneinander auf der schiefen Ebene 21 entfernt.

Der Schneidkörper 6 besteht aus einer Keramik und/oder PCBN oder einem CBN-Werkstoff.

Der Schneidkörper 6 kann auch zur Vergrößerung der Härte mit einer Beschichtung versehen sein.

## Patentansprüche

1. Schneidkörper (6) aus Keramik und/oder CBN mit einer ebenen Oberseite (15a) und einer Unterseite (15b) und mit die Oberseite (15a) und Unterseite (15b) verbindenden Seitenflächen (20), bevorzugt für ein Schneidwerkzeug (1), **dadurch gekennzeichnet, dass** der Schneidkörper (6) auf seiner Oberseite (15a) zwei entgegengesetzt geneigte, ebene rechteckige Dachschrägen (7) in der Art eines Sattel- oder Giebeldachs eines Hauses aufweist, die sich ausgehend von der Oberfläche (12) in den Schneidkörper (6) hinein erstrecken.

2. Schneidkörper nach Anspruch 1, **dadurch gekennzeichnet, dass** zwischen den zwei Dachschrägen (7) eine Firstfläche (9) angeordnet ist, die einen Teil der Oberfläche (12) des Schneidkörpers (6) bildet.

3. Schneidkörper nach Anspruch 1 oder 2, **dadurch gekennzeichnet, dass** die Dachschrägen (7) in einem Winkel 15°> α > 5°bevorzugt α = 10° zur Oberfläche (12) des Schneidkörpers (6) verlaufen, wobei sich die Dachschrägen (7) ausgehend von der Firstfläche (9) bis zum Rand des Schneidkörpers (6) erstrecken.

4. Schneidkörper nach einem der Ansprüche 1 bis 3, **dadurch gekennzeichnet, dass** der Schneidkörper (6) an seiner Unterseite abstehende Eingriffselemente (23) aufweist.

5. Schneidkörper (6) nach einem der Ansprüche 1 bis 4, **dadurch gekennzeichnet, dass** der Schneidkörper (6) geeignet ist für ein Schneidwerkzeug (1) zum radialen und axialen Einstechen und zum seitlichen Verfahren, zum sogenannten Stechdrehen von hauptsächlich metallischen Werkstoffen, mit einem Klemmhalter (2) und einer am Klemmhalter (2) befestigten Schneidkörperunterlage (3) auf der der Schneidkörper (6) aufliegt, der von einem Spannfinger (4) einer Spannpratze (5) des Schneidwerkzeugs (1) auf die Schneidkörperunterlage (3) gedrückt wird, wobei der Schneidkörper (6) auf der Schneidkörperunterlage (3) über ein Prisma geführt ist.

6. Schneidkörper nach Anspruch 5, **dadurch gekennzeichnet, dass** zwischen den zwei Dachschrägen (7) eine Firstfläche (9) angeordnet ist, die einen Teil der Oberfläche (12) des Schneidkörpers (6) bildet.

7. Schneidkörper nach Anspruch 5 oder 6, **dadurch gekennzeichnet, dass** die Dachschrägen (7) in einem Winkel 15°> α > 5°bevorzugt α = 10° zur Oberfläche (12) des Schneidkörpers (6) verlaufen, wobei sich die Dachschrägen (7) ausgehend von der Firstfläche (9) bis zum Rand des Schneidkörpers (6) erstrecken.

8. Schneidkörper nach einem der Ansprüche 5 bis 7, **dadurch gekennzeichnet, dass** der Schneidkörper (6) an seiner Unterseite abstehende Eingriffselemente (23) aufweist.

9. Schneidkörper nach Anspruch 8, **dadurch gekennzeichnet, dass** die Eingriffselemente sphärische Auskragungen sind, vorteilhafterweise Teil einer Prismenführung.

10. Schneidkörper nach einem der Ansprüche 1 bis 9, **dadurch gekennzeichnet, dass** die Auflageflächen der Ober- und Unterseite und/oder die Fasen des Schneidkörpers zumindest Teilflächen aufweisen, die aus der beim Sintern entstandenen Sinterhaut bestehen und keine Schädigung durch eine materialabtragende Behandlung erfahren haben.

11. Schneidkörper nach Anspruch 10, **dadurch gekennzeichnet, dass** die gesamte Ober- und Unterseite aus der beim Sintern entstandenen Sinterhaut bestehen.

12. Schneidkörper nach Anspruch 10 oder 11, **dadurch gekennzeichnet, dass** alle Fasen und/oder Seiten aus der beim Sintern entstandenen Sinterhaut bestehen.

13. Schneidkörper nach Anspruch 10, **dadurch gekennzeichnet, dass** einzelne Seitenflächen oder bevorzugt alle Seitenflächen aus der beim Sintern entstandenen Sinterhaut bestehen.

14. Schneidkörper nach einem der Ansprüche 1 bis 13, **dadurch gekennzeichnet, dass** die Ober- und/oder Unterseite und/oder die Seitenflächen und/oder die Fasen des Schneidkörpers mit einer ein- oder mehrlagigen Beschichtung versehen sind.

## Claims

1. Cutting body (6), preferably for a cutting tool (1), made of ceramic and/or CBN, comprising a planar upper face (15a) and a lower face (15b) and comprising lateral surfaces (20) which connect the upper face (15a) and lower face (15b), **characterized in that** the cutting body (6) has, on the upper face (15a) thereof, two oppositely inclined, planar, rectangular roof slopes (7) in the manner of a saddle roof or gabled roof of a house, which slopes extend from the surface (12) into the cutting body (6).

2. Cutting body according to claim 1, **characterized in that** a ridge surface (9) is arranged between the two roof slopes (7) and forms part of the surface (12) of the cutting body (6).

3. Cutting body according to either claim 1 or claim 2, **characterized in that** the roof slopes (7) extend at an angle of 15° > α > 5°, preferably α = 10°, to the surface (12) of the cutting body (6), the roof slopes (7) extending from the ridge surface (9) to the edge of the cutting body (6).

4. Cutting body according to any of claims 1 to 3, **characterized in that** the cutting body (6) has protruding engagement elements (23) on the lower face thereof.

5. Cutting body (6) according to any of claims 1 to 4, **characterized in that** the cutting body (6) is suitable for a cutting tool (1) for radial and axial recessing and for lateral movement, for what is referred to as recess turning of mainly metal materials, which cutting tool comprises a clamping holder (2) and a cutting body support (3) which is attached to the clamping holder (2), on which support the cutting body (6) rests, which body is pressed on the cutting body support (3) by a clamping finger (4) of a clamping claw (5) of the cutting tool (1), the cutting body (6) being guided on the cutting body support (3) by a prism.

6. Cutting body according to claim 5, **characterized in that** a ridge surface (9) is arranged between the two roof slopes (7) and forms part of the surface (12) of the cutting body (6).

7. Cutting body according to either claim 5 or claim 6, **characterized in that** the roof slopes (7) extend at an angle of 15° > α > 5°, preferably α = 10°, to the surface (12) of the cutting body (6), the roof slopes (7) extending from the ridge surface (9) to the edge of the cutting body (6).

8. Cutting body according to any of claims 5 to 7, **characterized in that** the cutting body (6) has protruding engagement elements (23) on the lower face thereof.

9. Cutting body according to claim 8, **characterized in that** the engagement elements are spherical projections, advantageously part of a prismatic guide.

10. Cutting body according to any of claims 1 to 9, **characterized in that** the support surfaces of the upper and lower faces and/or the chamfers of the cutting body have at least partial surfaces which consist of the sinter skin produced during sintering and have not suffered any damage caused by a material-removing treatment.

11. Cutting body according to claim 10, **characterized in that** the entire upper and lower faces consist of the sinter skin produced during sintering.

12. Cutting body according to either claim 10 or claim 11, **characterized in that** all chamfers and/or faces consist of the sinter skin produced during sintering.

13. Cutting body according to claim 10, **characterized in that** individual lateral surfaces or preferably all lateral surfaces consist of the sinter skin produced during sintering.

14. Cutting body according to any of claims 1 to 13, **characterized in that** the upper and/or lower face and/or the lateral surfaces and/or the chamfers of the cutting body are provided with a single or multi-layer coating.

## Revendications

1. Corps de coupe (6) en céramique et/ou en CBN comportant une face supérieure (15a) plane et une face inférieure (15b) et des surfaces latérales (20) reliant la face supérieure (15a) et la face inférieure (15b), de préférence pour un outil de coupe (1), **caractérisé en ce que** le corps de coupe (6) présente, sur sa face supérieure (15a), deux pentes de toit (7) rectangulaires planes et opposées du type selle ou toit à pignon d'une maison, lesquelles s'étendent de la surface (12) jusque dans le corps de coupe (6).

2. Corps de coupe selon la revendication 1, **caractérisé en ce qu'**une surface de faîtage (9) est disposée entre les deux pentes de toit (7), laquelle surface de faîtage fait partie de la surface (12) du corps de coupe (6).

3. Corps de coupe selon la revendication 1 ou 2, **caractérisé en ce que** les pentes de toit (7) s'étendent selon un angle de 15°> α > 5°, de préférence α = 10° par rapport à la surface (12) du corps de coupe (6), les pentes de toit (7) s'étendant de la surface de faîtage (9) au bord du corps de coupe (6).

4. Corps de coupe selon l'une des revendications 1 à 3, **caractérisé en ce que** le corps de coupe (6) comporte des éléments de prise (23) en saillie au niveau de sa face inférieure.

5. Corps de coupe (6) selon l'une des revendications 1 à 4, **caractérisé en ce que** le corps de coupe (6) est adapté à un outil de coupe (1) destiné au perçage radial et axial et au déplacement latéral, appelé rotation par perçage, de matériaux principalement métalliques, comportant un support de serrage (2) et un support de corps de coupe (3) fixé au support de serrage (2) sur lequel repose le corps de coupe (6) qui est pressé sur le support de corps de coupe (3) par un doigt de serrage (4) d'une griffe de serrage (5) de l'outil de coupe (1), le corps de coupe (6) étant guidé le support de corps de coupe (3) par un prisme.

6. Corps de coupe selon la revendication 5, **caractérisé en ce qu'**une surface de faîtage (9) est disposée entre les deux pentes de toit (7), laquelle surface de faîtage fait partie de la surface (12) du corps de coupe (6).

7. Corps de coupe selon la revendication 5 ou 6, **caractérisé en ce que** les pentes de toit (7) s'étendent selon un angle de 15°> α > 5°, de préférence α = 10° par rapport à la surface (12) du corps de coupe (6), les pentes de toit (7) s'étendant de la surface de faîtage (9) au bord du corps de coupe (6).

8. Corps de coupe selon l'une des revendications 5 à 7, **caractérisé en ce que** le corps de coupe (6) comporte des éléments de prise (23) en saillie au niveau de sa face inférieure.

9. Corps de coupe selon la revendication 8, **caractérisé en ce que** les éléments de prise sont des saillies sphériques qui font avantageusement partie d'un guide prismatique.

10. Corps de coupe selon l'une des revendications 1 à 9, **caractérisé en ce que** les surfaces de contact des faces supérieure et inférieure et/ou les chanfreins du corps de coupe comportent au moins des surfaces partielles constituées de la peau de frittage formée lors du frittage et qui n'ont pas été endommagées par un traitement d'enlèvement de matière.

11. Corps de coupe selon la revendication 10, **caractérisé en ce que** l'ensemble de la surface supérieure et inférieure est constitué de la peau de frittage formée lors du frittage.

12. Corps de coupe selon la revendication 10 ou 11, **caractérisé en ce que** tous les chanfreins et/ou toutes les faces sont constitués de la peau de frittage formée lors du frittage.

13. Corps de coupe selon la revendication 10, **caractérisé en ce que** les surfaces latérales individuelles ou de préférence toutes les surfaces latérales sont constituées de la peau de frittage formée lors du frittage.

14. Corps de coupe selon l'une des revendications 1 à 13, **caractérisé en ce que** la face supérieure et/ou inférieure et/ou les surfaces latérales et/ou les chanfreins du corps de coupe sont dotés d'un revêtement monocouche ou multicouche.
